# FASCICULE DE BREVET EUROPEEN

(11) **EP 2 562 958 B1**
(45) Date de publication et mention de la délivrance du brevet: **30.12.2015**
(21) Numéro de dépôt: 12193794.0
(22) Date de dépôt: 05.01.2009
(51) Int. Cl.: H04L 9/32

(54) **Procédé et dispositif de signature juridique de documents électroniques**
Vorrichtung und Verfahren zur rechtlichen Signatur elektronischer Dokumente
Device and method for legal signature of electronic documents

(30) Priorité: 07.01.2008 FR 0800078
(43) Date de publication de la demande: 27.02.2013
(62) Demande divisionnaire de: 09700622.5
(73) Titulaire: Trusteed SAS, 78490 Galluis (FR)
(72) Inventeur: Blot- Lefevre, Eric, 92200 Neuilly-sur-Seine (FR)
(74) Mandataire: Nguyen Van Yen, Christian

(56) Documents cités:
- MENEZES A J ET AL: "Handbook of Applied Cryptography, passage", 1 January 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 4,11 - 13,22, XP002489380, ISBN: 978-0-8493-8523-0 * page 4 * * page 11 - page 13 * * page 22 - page 23 * * page 28 - page 30 * * page 399 - page 400 * * page 548 - page 549 * * page 556 * * page 559 - page 560 * * page 581 - page 583 *
- SHI Q ET AL: "Signature-based approach to fair document exchange", IEE PROCEEDINGS : COMMUNICATIONS, INSTITUTION OF ELECTRICAL ENGINEERS, GB, vol. 150, no. 1, 13 February 2003 (2003-02-13), pages 21-27, XP006019685, ISSN: 1350-2425, DOI: 10.1049/IP-COM:20030306

## Description

La présente invention concerne un procédé et un dispositif de signature. Elle s'applique, en particulier, aux échanges de messages ou documents entre des personnes reliées, entre elles, par un réseau de télécommunication.

En ce qui concerne la signature juridique sur un document dématérialisé, la réglementation prévoit que, lorsque la signature est numérique, et à défaut de « signature électronique » validée par une Autorité de Certification agréée, elle consiste en l'usage d'un procédé fiable d'identification personnelle forte garantissant son lien avec l'acte auquel elle se rattache.

On rappelle que la signature électronique est un instrument régi par la Loi. C'est un procédé cryptographique associé à un certificat d'identité numérique appartenant exclusivement à son propriétaire, c'est-à-dire au signataire. La signature électronique sécurisée se conforme à trois principes.

Le premier concerne la sécurité de l'identification personnelle du signataire. La signature électronique contient le certificat d'identité numérique de son propriétaire. Le certificat a été émis par un bureau d'enrôlement ou d'enregistrement qui a la responsabilité d'établir le certificat d'identité numérique en fonction de l'état civil et des attributs de confiance de la personne enregistrée. La valeur probante du certificat est vérifiée par l'Autorité de Certification qui crée le certificat numérique et qui l'attribue à son propriétaire quand celui-ci a fourni les justificatifs papiers établissant son identité, son domicile, sa nationalité, ses coordonnées téléphoniques...

Le deuxième principe régissant la signature électronique concerne l'intégrité du document. La signature électronique établit le scellement du contenu qui est obligatoirement rattaché au document. Ce contenu est, éventuellement, chiffré. La signature « garantit avec l'acte auquel elle s'attache un lien tel que toute modification ultérieure de l'acte soit détectable ».

Le troisième principe régissant la signature électronique concerne l'unicité du procédé de signature électronique. L'instrument de signature est conservé par le signataire « sous son contrôle exclusif ». La signature « est propre au signataire ». Il est donc impossible de la prêter sans se mettre en infraction à la loi.

La transposition de la signature manuscrite sur un document papier en une signature électronique sur un document numérique utilise, donc, deux moyens associés qui sont, d'une part, des moyens pour identifier le signataire le certificat numérique révélant son identité et indiquant la référence du bureau d'enregistrement et de l'autorité de certification qui sont à l'origine de son émission et de sa publication sur un annuaire et, d'autre part, un procédé de cryptographie au sens de la Loi permettant de chiffrer le contenu du document.

Le document numérique ainsi signé permet d'établir la valeur probante de plusieurs éléments :
- l'identité de la personne signataire,
- l'expression de sa volonté quand il active la signature pour un document ou pour une action exécutée concernant ce document tel qu'envoyer et recevoir ce document,
- le lien entre l'expression de la volonté et le contenu de l'acte ou du document,
- le contenu du document ou la signification de l'action exécutée et
- la garantie d'intégrité du document ou de la signification de l'action exécutée. Un procédé de cette nature qui utilise une signature électronique est notamment divulgué par le document "Handbook of Applied Cryptography", Menezes et all, CRC Press, 1997.

Cela n'est pas aujourd'hui possible sans signature électronique, ce qui présente des inconvénients pour les utilisateurs.

La présente invention vise à remédier à ces inconvénients pour vérifier que les cinq éléments constitutifs de la valeur probante d'un document numérique existent.

D'autres avantages, buts et caractéristiques de la présente ressortiront de la description qui va suivre, faite, dans un but explicatif et nullement limitatif en regard des dessins annexés, dans lesquels :
- la figure 1 représente, schématiquement, des éléments d'un dispositif objet de la présente invention,
- la figure 2 représente, sous forme d'un logigramme, des étapes mises en oeuvre dans un mode de réalisation particulier du procédé objet de la présente invention.

La description ci-dessous ne fait référence, pour chaque document, qu'à un seul expéditeur et un seul destinataire. Cependant, la présente invention ne se limite pas à cette configuration mais s'étend, au contraire au cas où plusieurs expéditeurs doivent valider un document avant qu'il soit expédié et/ou au cas où plusieurs destinataires du document sont prévus.

Avant de décrire des modes de réalisation particuliers, en regard des figures, on donne, ci-dessous, une description générale de l'invention. Tout d'abord, on rappelle que la signature juridique sur un document dématérialisé consiste en l'usage d'un procédé fiable d'identification personnelle forte garantissant son lien avec l'acte auquel elle se rattache. Cette identification forte est faite par un Tiers de Confiance presté pour l'enregistrement personnel initial de l'état civil et des coordonnées téléphoniques personnelles. L'enregistrement comporte également l'acceptation d'une convention de correspondance universelle à valeur juridique probante dans laquelle la personne adhérent au service de transmission de documents consent à donner une procuration de scellement de ses documents de correspondance électronique à un prestataire de services documentaires, dénommé « opérateur de correspondance documentaire » qui n'est pas le tiers de confiance neutre.

Ainsi, à défaut de signature électronique détenue par la personne signataire d'un document, ou en cas de nullité de sa signature électronique dont le certificat d'identité numérique n'est pas validé (ou révoqué) par son établissement d'émission initiale, l'Autorité de Certification, la signature juridique consiste à faire procéder par le tiers de confiance à une identification forte par une boucle, ou un cycle, de transmission sécurisée d'un secret, ensuite à vérifier la validité de la convention de correspondance détenant la procuration de scellement vis-à-vis d'un opérateur désigné, enfin à vérifier que l'opérateur mandaté a bien réalisé le scellement du document avant de l'archiver dans un coffre électronique à valeur probante.

Enfin, le Tiers de Confiance établit, indépendamment de l'opérateur, un horodatage et un constat de clic de validation matérialisant ou représentant la volonté d'exercer une signature juridique significative pour le document concerné par la correspondance électronique. La signature électronique s'applique aussi bien pour le document d'expédition que pour l' « avis de réception » , document à part entière créé à réception du document par le destinataire.

Pour la validité du la signature juridique de nature numérique, à défaut de l'usage d'une « signature électronique » valable, aussi bien pour le besoin de l'expéditeur sur son document (fichier de correspondance) que pour le destinataire (fichier d'accusé de réception), il y a lieu de réunir informatiquement des preuves électroniques successives :
- identification de la personne et mesure de la force probante de cette identité qui doit être supérieure à 3 (voir, en ce qui concerne la notation de l'identité numérique, la demande de brevet FR 0604107 incorporée ici par référence) ;
- contrôle de l'existence d'une convention de correspondance universelle signée par la personne ;
- vérification que la convention de correspondance universelle signée comporte une procuration de scellement valide à un opérateur de correspondance documentaire toujours affilié au réseau de Tiers de confiance du Tiers de confiance ;
- preuve de remise au Tiers de Confiance du scellement du document et de sa mise en coffre fort électronique à valeur probante par et chez l'opérateur ;
- horodatage, par le Tiers de Confiance, du document avec sa preuve de scellement et
- notification au signataire, par courrier électronique et par le Tiers de Confiance :
   a. que le signataire a été identifié fortement, ce qui correspond au niveau de valeur probante,
   b. que le document a été scellé et archivé par l'opérateur du signataire, à l'aide de références et
   c. que le tout a été horodaté et immatriculé pour requérir sa signature juridique matérialisée par un clic sur l'interface sécurisée.

Au clic d'expression de signature juridique, le Tiers de Confiance dresse un procès-verbal signé avec sa propre signature électronique de Tiers de Confiance,
pour officialiser la conformité de la procédure d'expédition ou de réception documentaire.

Le procès-verbal électronique comporte un ensemble de données associées à la transmission du document par l'émetteur ou au destinataire, ledit ensemble comportant des identifications d'éléments d'authentification de l'émetteur ou du destinataire, de scellement du document, de fourniture du document par l'émetteur ou d'accès au document par le destinataire et d'horodatage de la fourniture du document ou de l'accès au document par le destinataire au document.

Ce procès-verbal est conservé dans le bureau de correspondance que met à la disposition du signataire le Tiers de Confiance (pour l'expéditeur et pour le destinataire). Ce procès-verbal est envoyé à l'opérateur qui est, seulement à réception du procès-verbal, autorisé à faire le mouvement de correspondance (c'est-à-dire soit l'envoi du document, soit l'envoi de l'accusé de réception) entre les deux parties sur les comptes courants de correspondance ouverts obligatoirement par les deux parties en correspondance dans les livres de l'opérateur. Ce n'est qu'à partir de ce mouvement de correspondance qu'on peut initier en service dérivé, par exemple par le biais de coupons de gestion (coupons associés à un document et définissant une tâche susceptible d'être effectuée en relation avec le document ainsi que le formulaire à utiliser lors de la réalisation de cette tâche, comme exposé dans la demande de brevet FR 07 00648 incorporée ici par référence) des prestations additionnelles de communication par courrier électronique (« email »), par télécopie électronique (« efax »), par AS2, ou par éditique (re-matérialisation : impression, mise sous pli et envoi par la poste).

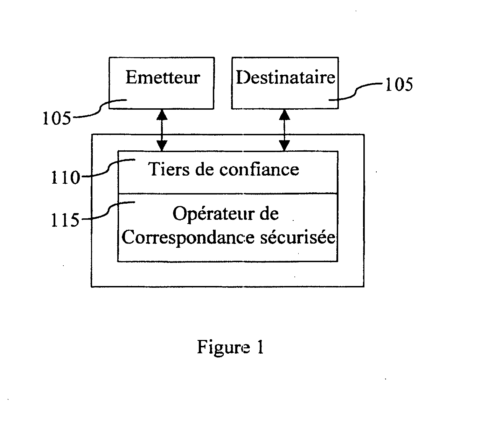

Comme on l'observe en figure 1, pour mettre en oeuvre la signature juridique objet de la présente invention, il est nécessaire que l'utilisateur 105 passe un contrat avec un Tiers de Confiance 110 et/ou avec un Opérateur de Correspondance sécurisée 115, pour utiliser leurs services de gestion documentaire.

Le Tiers de Confiance 110 s'occupe principalement d'enregistrer et contrôler l'identité numérique des utilisateurs. Le Tiers de Confiance 110 assure aussi le procès-verbal d'expédition ou de réception du document, pour chaque correspondant, avec son Opérateur de Correspondance 115 qui compose, chiffre ou scelle le document. Ceci est effectué en toute neutralité puisque le Tiers de Confiance est indépendant des parties en présence.

L'Opérateur de Correspondance 115 réalise, éventuellement, toutes les opérations de composition, transmission et conservation des documents avec leurs preuves d'envoi et de réception.

On rappelle ici qu'une lettre recommandée relative à la conclusion ou à l'exécution d'un contrat peut être envoyée par un courrier électronique à condition que ce courrier soit acheminé par un tiers selon un procédé permettant d'identifier le tiers, de désigner l'expéditeur, de garantir l'identité du destinataire, et d'établir si la lettre a été remise ou non au destinataire.

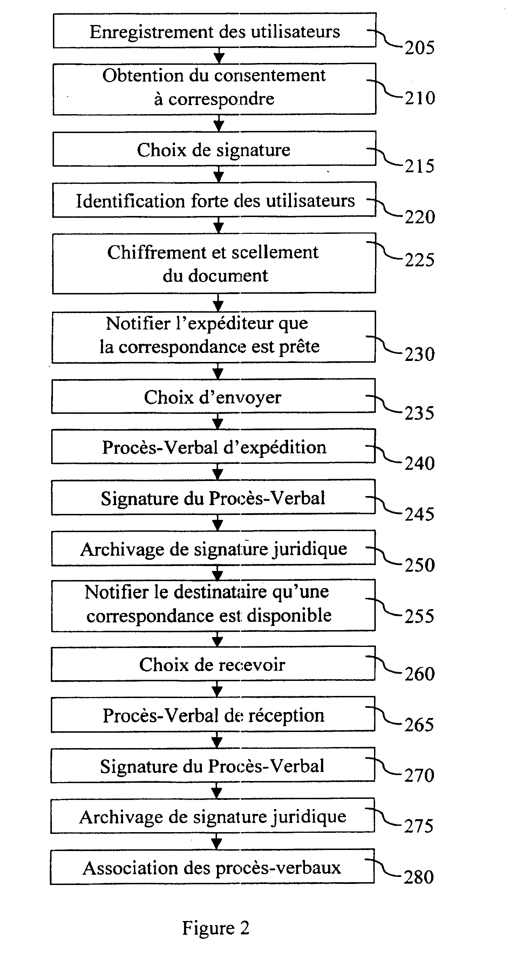

Le procédé objet de la présente invention consiste, pour le Tiers de Confiance (« TDC ») et pour l'opérateur de correspondance documentaire (« OCD »), à effectuer les opérations suivantes illustrées en figure 2 et décrites ci-dessous.

Au cours d'une étape 205, on enregistre chaque partie à une correspondance pour utiliser leur identité numérique avec une valeur probante certaine. Au cours de cette étape 205, le Tiers de Confiance procède à l'identification forte de la personne, comme exposé en regard de l'étape 220, ci-dessous.

Au cours d'une étape 210, le Tiers de Confiance obtient le consentement du destinataire pour correspondre avec l'expéditeur si celui-ci n'a pas déjà été enregistré. Le tiers de confiance propose donc, à chaque nouveau correspondant (qui reçoit une notification par « email » de la mise à sa disposition d'un courrier arrivé chez l'Opérateur, en ce qui concerne le destinataire), de s'enregistrer (Etat civil/identité numérique) pour adhérer et signer une « Convention de Correspondance à Valeur probante » équivalente à une convention de preuve qui le protège. Cette procédure lancée par le Tiers de Confiance s'appelle « Adhésion ». Elle est ordonnancée à la demande du correspondant expéditeur.

Au cours d'une étape 215, le Tiers de Confiance propose au destinataire, dans la « Convention de Correspondance à Valeur probante », le choix entre une signature électronique (« SE ») installée sur le poste de travail (par exemple par l'intermédiaire d'une clé USB, acronyme de « Universal Serial Bus », c'est-à-dire mettant en oeuvre le protocole USB) et une signature par procès-verbal électronique (« SPPVE »). Comme on le verra plus loin, la signature par procès-verbal électronique consiste à transposer la signature juridique en réunissant deux éléments : « l'identification forte » du correspondant connecté à distance, et « le chiffrement » du document de correspondance.

Au cours d'une étape 220, on procède à l'identification forte de l'utilisateur. Dans un mode de réalisation, la procédure d'authentification de l'utilisateur est une identification forte assurée par le Tiers de Confiance (« TDC »). Celui-ci adresse un message court, ou SMS (acronyme de « Short Message System ») contenant un code secret crypté à usage unique, sur le téléphone mobile de l'utilisateur, cet utilisateur devant le retranscrire, dans les vingt secondes suivantes, sur l'interface informatique du Tiers de Confiance pour lui prouver son identité après que le nom d'utilisateur (« login ») et un mot de passe statique aient été vérifiés. Le code secret crypté est une séquence de sept chiffres ou lettres dont la combinaison est calculée en fonction de l'indicatif numérique du certificat original (Numéro d'Enregistrement Légal) affecté à ce correspondant. Préférentiellement, ce code dépend aussi du contenu du document, de l'identité d'au moins l'un des correspondants, de l'horodatage et d'un nombre aléatoire.

Au cours d'une étape 225, on chiffre et scellement le document. Le chiffrement documentaire est confié, par procuration, à l'opérateur de correspondance documentaire (« OCD »). L'adhésion à la convention de correspondance indique le nom de l'opérateur de correspondance documentaire mandaté. Chaque document est chiffré par l'opérateur de correspondance documentaire avec sa propre signature électronique (clé privée) dont le certificat d'identité numérique est, par excellence, valide ou vérifié sur l'annuaire de révocation-mis à la disposition du public par l'Autorité de Certification sécurisée dont il dépend.

Au cours d'une étape 230, on avise l'expéditeur ou signataire, par un courrier électronique (« email ») émis par le Tiers de Confiance, que sa correspondance est prête pour qu'il valide son document avant de donner son consentement pour l'envoyer. Ce document d'envoi (lettre ou fichier texte de l'expéditeur) comporte un fichier PDF, un scellement et un certificat de signature.

Au cours d'une étape 235, on détecte et traite le choix de l'expéditeur. L' action exécutée est effectuée au niveau du Tiers de Confiance. Il est symbolisé par un ou deux « clic », c'est-à-dire une sélection avec un dispositif de pointage, par exemple une souris informatique, d'une zone affichée représentant son accord (par exemple un texte comme « J'accepte »). Un ou deux clics peuvent aussi signifier
que la correspondance est annulée ou refusée, selon la position identifiée par le-dispositif de pointage (par exemple sur un texte comme « Je refuse »). Le clic/double clic est constaté par le tiers de confiance et il lui est attribué un horodatage spécifique. En variante, c'est la saisie, sur un terminal différent du téléphone, d'un code transmis par message court (SMS) comme exposé en regard de l'étape 220, qui est considéré comme l'expression de la volonté de l'expéditeur de valider le document et la transmission de ce document.

Au cours d'une étape 240, on dresse un procès-verbal électronique (« PVE ») d'expédition du document. Le procès-verbal électronique d'expédition de document comporte un ensemble de données associées à la transmission du document par l'émetteur, ledit ensemble comportant des identifications d'éléments d'authentification de l'émetteur, de scellement du document, de validation du document par l'émetteur et d'horodatage de la validation du document par l'émetteur. Ainsi, c'est le Tiers de Confiance qui reconstitue, dans son procès-verbal, « les liens » nécessaires à la signature juridique du document, entre les données suivantes :
- l'identité numérique qualifiée de l'expéditeur,
- un lien avec une notation de l'identité numérique de l'expéditeur,
- la référence au certificat utilisé pour signer le document,
- la notation de l'identité numérique de l'expéditeur,
- le document numérique chiffré,
- la référence à l'opérateur de correspondance documentaire mandaté,
- la référence à la signature électronique de l'opérateur de correspondance documentaire,
- l'horodatage du clic de gestion,
- la référence à l'autorité d'horodatage et/ou
- la signification de l'action exécutée.

Au cours d'une étape 245, le Tiers de Confiance signe le procès-verbal électronique d'expédition, avec sa propre clé privée, le procès-verbal de signature de l'expéditeur, qui réunit, dans un fichier structuré, l'identité de l'expéditeur notée, le document chiffré, et l'action exécuté horodatée.

Au cours d'une étape 250, le Tiers de Confiance archive la signature juridique établie par le procès-verbal d'expédition. Le Tiers de Confiance dispose d'un journal récapitulant tous les procès-verbaux électroniques. Chaque procès-verbal de signature juridique concernant un correspondant, pour son envoi ou pour sa réception, mentionne, pour formaliser la signature juridique constatée par le Tiers de Confiance, l'identifiant ou le matricule du correspondant, le numéro de sa convention de correspondance acceptée, la référence de l'opérateur mandaté pour chiffrer, la référence de la signature électronique et de l'autorité de certification propres à l'opérateur. Le journal des signatures par procès-verbal électroniques (« SPPVE ») est déposé dans un coffre fort électronique en le cryptant avec la clé publique du Tiers de Confiance.

Au cours d'une étape 255, le Tiers de Confiance avise le destinataire, par courrier électronique (email), qu'une correspondance est disponible à son attention ; c'est le document d'accusé de réception.

Au cours d'une étape 260, le Tiers de Confiance détecte et traite le choix du destinataire de manière similaire à ce qui a été détaillé en regard de l'étape 235. Le clic/double clic est ainsi constaté par le Tiers de Confiance et il lui est attribué un horodatage spécifique en faisant appel à une autorité d'horodatage. En variante, c'est la saisie, sur un terminal différent du téléphone, d'un code secret transmis par message court (SMS) comme exposé en regard des étapes 220 et 235, qui est considéré comme l'expression de la volonté du destinataire d'accéder au document.

Au cours d'une étape 265, le Tiers de Confiance dresse un procès-verbal électronique (« PVE ») de remise de document. Le procès-verbal électronique de remise de document comporte un ensemble de données associées à la transmission du document au destinataire, ledit ensemble comportant des identifications d'éléments d'authentification du destinataire, de scellement du document, d'accès par le destinataire au document et d'horodatage de l'accès par le destinataire au document. Ainsi, c'est le Tiers de Confiance qui reconstitue, dans son procès-verbal, « les liens » nécessaires à la signature juridique du document, entre les données suivantes :
- l'identité numérique qualifiée du destinataire,
- un lien avec une notation de l'identité numérique du destinataire,
- la référence au certificat utilisé pour signer le document,
- la notation de l'identité numérique du destinataire,
- le document numérique chiffré,
- la référence à l'opérateur mandaté par le destinataire
- la référence à la signature électronique de cet opérateur,
- l'horodatage du clic de gestion,
- la référence à l'autorité d'horodatage et/ou
- la signification de l'action exécutée.

Au cours d'une étape 270, le Tiers de Confiance signe, avec sa propre clé privée, le procès-verbal électronique (« PVE ») de remise du document au destinataire, qui réunit dans un fichier structuré l'identité du destinataire notée, le document chiffré, et l'action exécutée horodatée.

Au cours d'une étape 275, le Tiers de Confiance archive la signature juridique établie par le procès-verbal de remise du document comme exposé en regard de l'étape 250.

Au cours d'une étape 280, on associe, en mémoire, les procès-verbaux d'expédition et de remise du document, de manière connue en soi. Cette association est forte et comporte un numéro d'immatriculation du document et le nom du Tiers de Confiance.

On récapitule, dans le tableau qui suit, différentes étapes mises en oeuvre dans des modes de réalisation particuliers du procédé objet de la présente invention.

| Adhérent Correspondant Signataire | Tiers de Confiance | Opérateur de correspondance documentaire |
|---|---|---|
| 1. Enregistrement Préalable Expéditeur (ou Destinataire) | Bureau d'Enregistrement Etat Civil Certificat d'identité numérique Notation de l'identité numérique Choix de la signature : Signature électronique ou Signature par procès-verbal Electronique (SPPVE) | |
| 2. Adhésion spontanée Ou Invitation Concerne le destinataire avisé de la réception d'un courrier | Adhésion à la Convention de Correspondance Documentaire Mention de l'Opérateur mandaté Choix de ses Prestations de services Option de Procuration confiée à l'Opérateur mandaté pour chiffrer ou sceller les documents d'envoi et de réception de l'Invité. | |
| 3. Authentification forte personnelle | Identification personnelle par Login & Mot de Passe + le code secret crypté SMS | |
| 4. Scellement pour l'intégrité du document envoyé ou de l'AR retourné | | Action de scellement du document par l'Opérateur qui utilise sa clé privée de signature électronique. |
| 5. Notification du document pour envoi ou réception | Email envoyé à l'Expéditeur/Destinataire authentifié pour qu'il manifeste son action exécutée par « un clic » significatif : demande d'envoi/AR | |
| 6. Procès-verbal Electronique | Etabli par le Tiers de confiance en réunissant les preuves de l'authentification forte (ID), du scellement du document avec la SE de l'Opérateur, de l'horodatage du clic de gestion ou de validation pour envoyer (ou recevoir) le document | |
| 7. Signature électronique du procès-verbal | Utilisation par le Tiers de Confiance de sa clé privée de signature électronique dont on a préalablement vérifié la validité auprès de son Autorité de Certification. | |
| 8. Archivage électronique à valeur probante des PVE | Mise en coffre fort électronique du journal quotidien des signatures par procès-verbaux électroniques | |
| 9. Option territorialité Archivage Opérateur National | Transfert copie conforme à l'Opérateur dépositaire des preuves légales du correspondant domicilié dans son pays. | Cryptage de la copie conforme pour le coffre fort nominatif du correspondant et envoi d'un certificat de dépôt au tiers de confiance pour lui confirmer l'archivage national réalisé. |
| 10. Option territorialité Impression Routage | Envoi des données sécurisées à l'Opérateur national | Impression et routage de la preuve de signature par procès-verbal électronique Récapitulant les informations enregistrées dans le journal de signatures du TDC |

On observe les rôles différents du Tiers de Confiance de Correspondance (TCC) et de l'opérateur de correspondance documentaire (« OCD »). Le Tiers de Confiance de correspondance est un organisme neutre qui assure les rôles nécessaires pour enregistrer l'identité des personnes avec leur état civil et leurs objets de correspondance. Il garantit le secret ou la confidentialité de ces attributs de confiance et des objets de correspondance qui sont exclusivement employés dans l'ordonnancement des tâches de correspondance confiées à un ou plusieurs opérateurs de gestion documentaire. Il ordonnance le flux de travail (« workflow ») de gestion documentaire en vérifiant, à chaque opération, que l'opérateur désigné pour une tâche documentaire s'acquitte bien de son travail en délivrant à l'issue de cette opération les justificatifs ou le « chemin de révision » entre sa prestation et la preuve. Le Tiers de Confiance assure aussi la coordination et l'interopérabilité des échanges entre les opérateurs impliquées ou mobilisés dans une chaine de traitement documentaire à valeur probante. Le Tiers de Confiance établit, pour les deux parties en correspondance, un procès-verbal d'émission et de réception du document pour authentifier la signature juridique de chaque personne engageant sa responsabilité pour valider et envoyer, ou pour valider et recevoir un document électronique. Le procès-verbal d'émission ou de réception contient les justificatifs de la signature juridique dématérialisée du signataire ainsi que l'horodatage du clic signifiant son accord ou son consentement pour valider et correspondre avec la contrepartie pour le document concerné. Enfin, le Tiers de Confiance assure le « transfert » de chaque document original qui transite par lui pour être déplacé d'un coffre-fort à un autre, entre deux tiers d'archivage distants qui sont affiliés au réseau de Tiers de Confiance et qui utilisent, à ce titre, un protocole tiers de confiance bien spécifique et sécurisé.

L'opérateur de correspondance documentaire exécute les tâches d'ordonnancement qui lui sont confiées par le Tiers de confiance en fonction du mandat déposé pour lui à l'enregistrement de chaque correspondant déposant ses objets de correspondance. Ses tâches sont les suivantes :
- composition de fichier simple ou structuré,
- origination du document en partie double : deux « originels » certifiés conformes,
- si l'émetteur a utilisé une signature électronique, vérification du certificat,
- protection du document avec une option de scellement par procuration à l'opérateur,
- conservation du document avec ses justificatifs ou leur liste récapitulative par archivage à valeur probante dans chaque coffre fort électronique nominatif,
- commutation de message : transmission bilatérale de duplicata en comptes courants de correspondance pour lecture et téléchargement en mode sécurisé collaboratif,
- ampliation de document : impression en plusieurs exemplaires, mise sous enveloppe et routage de copies conformes sur papier,
- transposition du fichier structuré ou de ses mentions obligatoires en un seul exemplaire numérique. Il s'agit d'un transfert de l'original ou d'une lecture automatique univoque des mentions légales obligatoires du fichier, et d'un retour de
l'accusé de réception justificatif signé et renvoyé à l'émetteur (protocole de communication AS2, AS 400...).

Ces tâches sont ordonnancées par un Tiers de Confiance vis-à-vis d'un ou plusieurs opérateurs mandatés par l'expéditeur. Pour chaque tâche, le Tiers de Confiance met à la disposition des informations dont il a besoin : identité, notation de l'identité personnelle, coordonnées téléphoniques, adresses courriels, règles établies par les conventions de correspondances bilatérales, autres dispositions réglementaires, charte graphique, formulaire de référence, mandats de gestion documentaire désignant les opérateurs impliqués, procuration de scellement confié à un opérateur, choix de signature juridique et électronique, références du workflow de gestion avec les opérateurs concernés, ...

On note que le Tiers de Confiance vérifie chaque prestation réalisée pour donner un certificat de conformité et consigner l'opération sur son « chemin de révision » (piste d'audit) avant de lancer l'ordonnancement de la prestation suivante.

## Revendications

1. Système de gestion de signatures juridiques de documents électroniques comprenant :
- Un module d'enregistrement par un tiers de confiance (110) d'identités numériques d'utilisateurs dudit système et de conventions de correspondance électronique par lesquelles lesdits utilisateurs mandatent un opérateur de correspondance documentaire (115) pour administrer une preuve de signature juridique;
- Un module d'authentification forte en ligne par ledit tiers de confiance de l'identité numérique d'un utilisateur;
Ledit système étant **caractérisé en ce qu'**il comprend en outre :
- Un module d'émission par ledit utilisateur enregistré d'un signal de validation du contenu de documents électroniques ;
- Un module de confirmation par l'un au moins dudit opérateur de correspondance et dudit tiers de confiance dudit signal de validation.

2. Système de gestion de signatures juridiques selon la revendication 1, **caractérisé en ce que** le module d'enregistrement attribue un niveau de confiance à l'identité numérique d'un utilisateur et **en ce que** ledit système n'autorise les opérations de correspondance qu'entre des utilisateurs dont l'identité numérique est d'un niveau de confiance supérieur à un seuil prédéterminé .

3. Système de gestion de signatures juridiques selon l'une des revendications 1 à 2, **caractérisé en ce que** le module d'authentification forte comprend un sous-module d'authentification faible de l'utilisateur sur un premier terminal connecté audit sous-module d'authentification par un premier canal de communication, un sous-module de déclenchement par le sous-module d'authentification faible de l'émission sur un deuxième canal de communication d'un code à usage unique à destination d'un deuxième terminal associé à l'identité numérique dudit utilisateur, et un sous-module de validation de l'identité entre le code émis et un code entré par l'utilisateur sur le premier terminal avant l'expiration d'un délai déterminé.

4. Système de gestion de signatures juridiques selon l'une des revendications 1 à 3, **caractérisé en ce que** le module d'émission du signal de validation comprend un sous-module de scellement du document.

5. Système de gestion de signatures juridiques selon l'une des revendications 1 à 4, **caractérisé en ce que** le module d'émission du signal de validation par le tiers de confiance comprend un sous-module d'interprétation d'une entrée de commande par l'utilisateur sur un premier terminal relié audit système sur lequel il visualise le contenu dudit document électronique dans un format non modifiable.

6. Système de gestion de signatures juridiques selon l'une des revendications 1 à 4, **caractérisé en ce que** le module d'émission du signal de validation comprend un sous-module d'interprétation d'une entrée de commande par l'utilisateur sur un deuxième terminal distinct d'un premier terminal relié audit système sur lequel il visualise le contenu dudit document électronique dans un format non modifiable.

7. Système de gestion de signatures juridiques selon l'une des revendications 5 à 6, **caractérisé en ce que** le module d'émission comprend un sous-module de choix par l'utilisateur de destinataires d'un document électronique, un sous-module de validation des identités numériques desdits destinataires et un sous-module de notification à l'utilisateur que le document électronique est prêt à être expédié aux destinataires.

8. Système de gestion de signatures juridiques selon l'une des revendications 1 à 7, **caractérisé en ce que** le module de confirmation comprend un sous-module de création d'un procès-verbal électronique d'expédition d'un document électronique comprenant une trace numérique de l'authentification forte de l'utilisateur, du scellement du document, de la validation horodatée du document électronique par l'utilisateur.

9. Système de gestion de signatures juridiques selon la revendication 8, **caractérisé en ce que** le module de confirmation comprend un sous-module de signature électronique par le tiers de confiance du procès-verbal électronique d'expédition avec une clé privée.

10. Système de gestion de signatures juridiques selon l'une des revendications 1 à 9, **caractérisé en ce qu'**il comprend en outre un module de gestion de la remise d'un document électronique expédié à un destinataire.

11. Système de gestion de signatures juridiques selon la revendication 10, **caractérisé en ce que** le module de gestion de la remise d'un document électronique expédié à un destinataire comprend un sous-module de notification audit destinataire de la disponibilité dudit document et un sous-module de validation de la lecture du contenu du document par le destinataire.

12. Système de gestion de signatures juridiques selon la revendication 11, **caractérisé en ce que** le sous-module de validation de la lecture du contenu du document par le destinataire comprend en outre un sous-module de création d'un procès-verbal électronique de remise du document électronique à un destinataire, comprenant une trace numérique de l'authentification forte du destinataire et de la validation horodatée de la prise de connaissance du document électronique par de destinataire.

13. Système de gestion de signatures juridiques selon la revendication 12, **caractérisé en ce que** le sous-module de validation de la lecture du contenu du document par le destinataire comprend en outre un sous-module de signature électronique par le tiers de confiance avec une clé privée du procès-verbal électronique de remise du document au destinataire.

14. Procédé de signature juridique de documents électroniques comprenant :
- Une étape d'authentification forte en ligne par un tiers de confiance de l'identité numérique d'un utilisateur préenregistré par ledit tiers de confiance;
Ledit procédé étant **caractérisé en ce qu'**il comprend en outre :
- Une étape d'émission par ledit utilisateur préenregistré d'un signal de validation du contenu de documents électroniques ;
- Une étape de confirmation par au moins l'un dudit tiers de confiance et d'un opérateur de correspondance dudit signal de validation.

15. Procédé de signature juridique de documents électroniques selon la revendication 14, **caractérisé en ce qu'**il comprend préalablement à l'étape d'authentification forte en ligne, une étape d'enregistrement par un tiers de confiance (110) d'identités numériques d'utilisateurs et de conventions de correspondance électronique par lesquelles lesdits utilisateurs mandatent un opérateur de correspondance documentaire (115) pour administrer une preuve de signature juridique.

## Patentansprüche

1. System zur Verwaltung rechtsgültiger Signaturen von elektronischen Dokumenten, umfassend:
- ein Modul zur Registrierung durch einen vertrauenswürdigen Dritten (110) von digitalen Identitäten von Benutzern des Systems und elektronischen Korrespondenz-regelungen, durch welche die Benutzer einen Betreiber von Dokumentenkorrespondenz (115) beauftragen, einen rechtsgültigen Signaturbeweis beizubringen;
- ein Modul zur starken Online-Authentifizierung durch den vertrauenswürdigen Dritten der digitalen Identität eines Benutzers;
wobei das System **dadurch gekennzeichnet ist, dass** es ferner Folgendes umfasst:
- ein Modul zur Aussendung durch den registrierten Benutzer eines Signals zum Validieren des Inhalts von elektronischen Dokumenten;
- ein Modul zur Bestätigung des Validierungssignals durch den einen oder die mehreren von dem Korrespondenzbetreiber oder dem vertrauenswürdigen Dritten.

2. System zur Verwaltung rechtsgültiger Signaturen nach Anspruch 1, **dadurch gekennzeichnet, dass** das Registrierungsmodul der digitalen Identität eines Benutzers ein Vertrauensniveau zuteilt, und dass das System die Korrespondenzvorgänge nur zwischen Benutzern zulässt, deren digitale Identität ein Vertrauensniveau aufweist, das höher als eine vorbestimmte Schwelle ist.

3. System zur Verwaltung rechtsgültiger Signaturen nach einem der Ansprüche 1 bis 2, **dadurch gekennzeichnet, dass** das Modul zur starken Authentifizierung ein Teilmodul zur schwachen Authentifizierung des Benutzers an einem ersten Endgerät, das über einen ersten Kommunikationskanal an das Teilmodul zur Authentifizierung angeschlossen ist, ein Teilmodul zur Auslösung durch das Teilmodul zur schwachen Authentifizierung der Aussendung auf einem zweiten Kommunikationskanal eines Codes zum einmaligen Gebrauch an ein zweites Endgerät, das mit der digitalen Identität des Benutzers verknüpft ist, und ein Teilmodul zur Validierung der Identität zwischen dem ausgesendeten Code und dem Code, der vom Benutzer an dem ersten Endgerät vor Ablauf einer bestimmten Frist eingegeben wird, umfasst.

4. System zur Verwaltung rechtsgültiger Signaturen nach einem der Ansprüche 1 bis 3, **dadurch gekennzeichnet, dass** das Modul zur Aussendung des Validierungssignals ein Teilmodul zur Versiegelung des Dokuments umfasst.

5. System zur Verwaltung rechtsgültiger Signaturen nach einem der Ansprüche 1 bis 4, **dadurch gekennzeichnet, dass** das Modul zur Aussendung des Validierungssignals durch den vertrauenswürdigen Dritten ein Teilmodul zur Auslegung eines Befehlseintrags durch den Benutzer an einem ersten Endgerät, das mit dem System verbunden ist und an dem er den Inhalt des elektronischen Dokuments in einem nicht bearbeitbaren Format visualisiert, umfasst.

6. System zur Verwaltung rechtsgültiger Signaturen nach einem der Ansprüche 1 bis 4, **dadurch gekennzeichnet, dass** das Modul zur Aussendung des Validierungssignals ein Teilmodul zur Auslegung eines Befehlseintrags durch den Benutzer an einem zweiten Endgerät, das anders als ein erstes Endgerät ist, das mit dem System verbunden ist, und an dem er den Inhalt des elektronischen Dokuments in einem nicht bearbeitbaren Format visualisiert, umfasst.

7. System zur Verwaltung rechtsgültiger Signaturen nach einem der Ansprüche 5 bis 6, **dadurch gekennzeichnet, dass** das Aussendungsmodul ein Teilmodul zur Auswahl durch den Benutzer von Empfängern eines elektronischen Dokuments, ein Teilmodul zur Validierung der digitalen Identitäten der Empfänger und ein Teilmodul zur Benachrichtigung des Benutzers, dass das elektronische Dokument bereit ist, um an die Empfänger gesendet zu werden, umfasst.

8. System zur Verwaltung rechtsgültiger Signaturen nach einem der Ansprüche 1 bis 7, **dadurch gekennzeichnet, dass** das Bestätigungsmodul ein Teilmodul zur Erstellung eines elektronischen Protokolls der Absendung eines elektronischen Dokuments umfasst, das einen digitalen Nachweis der starken Authentifizierung des Benutzers, der Versiegelung des Dokuments und der zeitgestempelten Validierung des elektronischen Dokuments durch den Benutzer umfasst.

9. System zur Verwaltung rechtsgültiger Signaturen nach Anspruch 8, **dadurch gekennzeichnet, dass** das Bestätigungsmodul ein Teilmodul zur elektronischen Signatur durch den vertrauenswürdigen Dritten des elektronischen Absendungsprotokolls mit einem privaten Schlüssel umfasst.

10. System zur Verwaltung rechtsgültiger Signaturen nach einem der Ansprüche 1 bis 9, **dadurch gekennzeichnet, dass** es ferner ein Modul zur Verwaltung der Übergabe eines elektronischen Dokuments, das an einen Empfänger abgesendet wird, umfasst.

11. System zur Verwaltung rechtsgültiger Signaturen nach Anspruch 10, **dadurch gekennzeichnet, dass** das Modul zur Verwaltung der Übergabe eines elektronischen Dokuments, das an einen Empfänger abgesendet wird, ein Teilmodul zur Benachrichtigung des Empfängers über die Verfügbarkeit des Dokuments und ein Teilmodul zur Validierung des Lesens des Inhalts des Dokuments durch den Empfänger umfasst.

12. System zur Verwaltung rechtsgültiger Signaturen nach Anspruch 11, **dadurch gekennzeichnet, dass** das Teilmodul zur Validierung des Lesens des Inhalts des Dokuments durch den Empfänger ferner ein Teilmodul zur Erstellung eines elektronischen Protokolls der Übergabe des elektronischen Dokuments an einen Empfänger umfasst, das einen digitalen Nachweis der starken Authentifizierung des Empfängers und der zeitgestempelten Validierung der Kenntnisnahme des elektronischen Dokuments durch den Empfänger umfasst.

13. System zur Verwaltung rechtsgültiger Signaturen nach Anspruch 12, **dadurch gekennzeichnet, dass** das Teilmodul zur Validierung des Lesens des Inhalts des Dokuments durch den Empfänger ferner ein Teilmodul zur elektronischen Signatur durch den vertrauenswürdigen Dritten mit einem privaten Schlüssel des elektronischen Protokolls der Übergabe des Dokuments an den Empfänger umfasst.

14. Verfahren zur rechtsgültigen Signatur elektronischer Dokumente, umfassend:
- einen Schritt des starken Online-Authentifizierens durch einen vertrauenswürdigen Dritten der digitalen Identität eines Benutzers, der von dem vertrauenswürdigen Dritten im Voraus registriert wurde;
wobei das Verfahren **dadurch gekennzeichnet ist, dass** es ferner Folgendes umfasst:
- einen Schritt des Aussendens durch den im Voraus registrierten Benutzer eines Signals zur Validierung des Inhalts von elektronischen Dokumenten;
- einen Schritt des Bestätigens des Validierungssignals durch den einen oder die mehreren von dem vertrauenswürdigen Dritten oder einem Komespondenzbetreiber.

15. Verfahren zur rechtsgültigen Signatur elektronischer Dokumente nach Anspruch 14, **dadurch gekennzeichnet, dass** es vor dem Schritt des starken Online-Authentifizierens einen Schritt des Registrierens durch einen vertrauenswürdigen Dritten (110) von digitalen Benutzeridentitäten und elektronischen Korrespondenzregelungen, über welche die Benutzer einen Betreiber von Dokumentenkorrespondenz (115) beauftragen, einen Beweis rechtsgültiger Signatur beizubringen.

## Claims

1. A system for managing legal signatures of electronic documents, comprising:
- a module for a trusted third party (110) to register digital identities of users of said system and electronic correspondence conventions, through which said users appoint a documentary correspondence operator (115) to administer a proof of legal signature;
- a module for strong online authentication of the digital identity of a user by said trusted third party;
said system being **characterised in that** it further comprises:
- a module for said registered user to transmit a signal validating the content of electronic documents;
- a module for one or more of said correspondence operator or said trusted third party to confirm said validation signal.

2. The legal signature management system according to claim 1, **characterised in that** said registration module assigns a trust level to the digital identity of a user and **in that** said system only authorises correspondence operations between users with a digital identity that has a trust level that is higher than a predetermined threshold.

3. The legal signature management system according to any one of claims 1 to 2, **characterised in that** said strong authentication module comprises a weak authentication sub-module of the user on a first terminal that is connected to said authentication sub-module by a first communication channel, a sub-module for said weak authentication sub-module to trigger the transmission of a unique use code on a second communication channel, which code is intended for a second terminal associated with the digital identity of said user, and a sub-module for validating the identity between the transmitted code and a code input by the user on the first terminal before a determined delay has lapsed.

4. The legal signature management system according to any one of claims 1 to 3, **characterised in that** said module for transmitting said validation signal comprises a sub-module for sealing the document.

5. The legal signature management system according to any one of claims 1 to 4, **characterised in that** said module for transmitting said validation signal by said trusted third party comprises a sub-module for interpreting a control input by the user on a first terminal connected to said system, which terminal displays the content of said electronic document in a non-modifiable format.

6. The legal signature management system according to any one of claims 1 to 4, **characterised in that** said module for transmitting said validation signal comprises a sub-module for interpreting a control input by said user on a second terminal that is distinct from a first terminal connected to said system, which terminal displays the content of said electronic document in a non-modifiable format.

7. The legal signature management system according to any one of claims 5 to 6, **characterised in that** said transmission module comprises a sub-module for the user to select recipients of an e-document, a sub-module for validating digital identities of said recipients and a sub-module for notifying said user that said electronic document is ready to be sent to said recipients.

8. The legal signature management system according to any one of claims 1 to 7, **characterised in that** said confirmation module comprises a sub-module for creating an electronic electronic document sent report comprising a digital trail of the strong authentication of the user, of the document seal, of the time-stamped validation of the electronic document by the user.

9. The legal signature management system according to claim 8, **characterised in that** said confirmation module comprises a sub-module for said trusted third party to electronically sign the electronic sent report with a private key.

10. The legal signature management system according to any one of claims 1 to 9, **characterised in that** it further comprises a module for managing the delivery of an electronic document sent to a recipient.

11. The legal signature management system according to claim 10, **characterised in that** said module for managing the delivery of an electronic document sent to a recipient comprises a sub-module for notifying said recipient of the availability of said document and a sub-module for validating that the content of said document has been read by said recipient.

12. The legal signature management system according to claim 11, **characterised in that** said sub-module for validating that the content of the document has been read by said recipient further comprises a sub-module for creating an electronic report of the delivery of the electronic document to a recipient, comprising a digital trail of the strong authentication of the recipient and of the time-stamped validation of the acknowledgement of the electronic document by said recipient.

13. The legal signature management system according to claim 12, **characterised in that** said sub-module for validating that the content of said document has been read by said recipient further comprises a sub-module for said trusted third party to electronically sign the electronic report of document delivery to the recipient with a private key.

14. A method for legally signing electronic documents comprising:
- a step of strong online authentication by a trusted third party of the digital identity of a user pre-registered by said trusted third party;
said method being **characterised in that** it further comprises:
- a step of said preregistered user transmitting a signal validating the content of electronic documents;
- a step of confirming, by one or more of said trusted third party or a correspondence operator, said validation signal.

15. The method for legally signing electronic documents according to claim 14, **characterised in that** it comprises, before the step of strong online authentication, a step of a trusted third party (110) registering digital identities of users and electronic correspondence conventions, through which said users appoint a documentary correspondence operator (115) to administer proof of legal signature.
